# NOUVEAU FASCICULE DE BREVET EUROPEEN

(11) **EP 0 537 043 B2**
(45) Date de publication et mention de la décision concernant l'opposition: **27.03.2002**
(45) Mention de la délivrance du brevet: 27.03.1996
(21) Numéro de dépôt: 92402567.9
(22) Date de dépôt: 18.09.1992
(51) Int. Cl.: F16C 35/06, F16C 33/58, B60B 27/00

(54) **Montage de roulement comportant une bague extérieure immobilisée dans un alésage**
Lageranordnung, wobei eine Aussenring in einer Bohrung befestigt ist
Bearing mounting with an outer bearing ring secured in a bore

(30) Priorité: 09.10.1991 FR 9112414
(43) Date de publication de la demande: 14.04.1993
(73) Titulaire: S.N.R. ROULEMENTS, 74010 Annecy Cédex (FR)
(72) Inventeur: Michaud, Thierry, F-74000 Annecy (FR)
(74) Mandataire: Kohn, Philippe

(56) Documents cités:
- DE-A- 2 148 324
- DE-A- 2 741 057
- DE-A- 3 420 665
- FR-A- 1 556 650
- FR-A- 2 631 402
- GB-A- 1 026 324
- US-A- 3 294 459
- US-A- 3 512 856
- US-A- 4 997 297
- B. Frederiksson"Kontaktspannungen und Drehmomentübertragung im Preßverband", konstruktion 30(1978) H2, pages 69 à 73
- B. Frederiksson"Kontaktspannungen und Drehmomentübertragung im Preßverband", konstruktion 30(1978) H2, pages 69 à 73

## Description

L'invention concerne un montage de roulement comportant une bague extérieure immobilisée dans un alésage et séparée radialement d'une bague intérieure par des corps roulants disposés entre lesdites bagues et respectivement en contact avec des pistes de roulement portées par la bague intérieure et des pistes de roulements portées par la bague extérieure situées de part et d'autre d'une zone médiane latéralement, adjacentes à une zone de la bague extérieure élastiquement déformable sous l'action d'un effort de contrainte radiale dirigé vers l'axe du roulement.

Un tel montage de roulement est connu du document FR-A-1 566 650 qui décrit des roulements dont la bague extérieure est constituée par une tôle portant des chemins de roulement, limités latéralement par des bords recourbés capables d'équilibrer les efforts parallèlement au plan médian du roulement et formant une profonde concavité à la zone médiane.

Le document FR-A-2 631 402 décrit un montage d'un roulement de roue selon le préambule de la revendication 1, notamment un dispositif de retenue axiale du roulement d'une roue de véhicule automobile dans lequel la bague extérieure du roulement est immobilisée dans le porte-fusée au moyen d'un anneau d'arrêt placé dans une gorge et prenant appui sur les bords de celle-ci.

Les tolérances d'usinage et de montage des roulements dans un alésage autorisent des déplacements axiaux limités de la bague extérieure sous l'action d'efforts de charge engendrés au cours du fonctionnement du roulement.

Des montages plus serrés, nécessitent des tolérances d'usinage et d'ajustement plus coûteuses à réaliser et des efforts de montage plus importants.

Les charges axiales, consécutives par exemple aux manoeuvres de parcage d'un véhicule dont le porte-fusée porte un tel roulement, induisent de petits déplacements de la bague dans son alésage.

Celle-ci vient alors alternativement en contact avec des éléments de butée portés par le porte-fusée et engendre des bruits.

L'invention a pour objet de réaliser une retenue axiale améliorée de la bague d'un roulement en augmentant la pression au contact de la surface de l'alésage.

On sait en effet que l'effort antagoniste qui s'oppose au déplacement de la bague, F = S.P.f est proportionnel à la Pression de contact P ou à la surface extérieure S de la bague, f étant le coefficient de frottement des surfaces en contact.

L'invention a pour objet d'augmenter la résistance au déplacement axial du roulement dans un alésage en augmentant la pression de contact de la bague extérieure avec la surface dudit alésage.

L'invention a également pour objet de faciliter la répartition axiale homogène de l'effort de pression au contact de la surface de l'alésage de montage du roulement.

Selon l'invention, les pistes de roulement sont latéralement adjacentes à une zone de la bague extérieure élastiquement déformable sous l'action d'un effort de contrainte radiale dirigé vers l'axe du roulement, et la portée de montage de la bague extérieure, respectivement en appui sur la paroi de l'alésage sous l'action de la force d'expansion radiale exercée par ladite zone pour définir la portée de montage de la bague extérieure dans ledit alésage, possède une légère concavité dans le but de permettre une réduction dans lesdites zones latérales du diamètre extérieur de la bague au cours du montage de celle-ci dans l'alésage et de répartir la pression de contact de la bague extérieure avec la surface dudit alésage de façon homogène en direction axiale.

La concavité de la surface extérieure de la bague peut être obtenue par tout procédé connu, notamment par usinage ou forgeage.

Le montage ainsi réalisé améliore la fixation de la bague extérieure du roulement par suite d'une distribution homogène des pressions au contact de l'alésage de réception de la bague.

Le montage présente en outre l'avantage de supprimer les contraintes dans les zones latérales de moindre rigidité de la bague.

D'autres caractéristiques et avantages de l'invention apparaîtront à la lecture de la description faite référence au dessin annexé, dans lequel :
- la figure 1 est une vue en coupe axiale du montage qui fait application d'un roulement à bague intérieure en deux parties montée sur un moyeu de roue.
- la figure 2 est une vue en coupe axiale du roulement représenté à la figure 1.
- la figure 3 est une vue en coupe axiale d'une partie du montage représenté à la figure 1 illustrant la répartition axiale de l'effort de serrage de la bague dans son alésage.

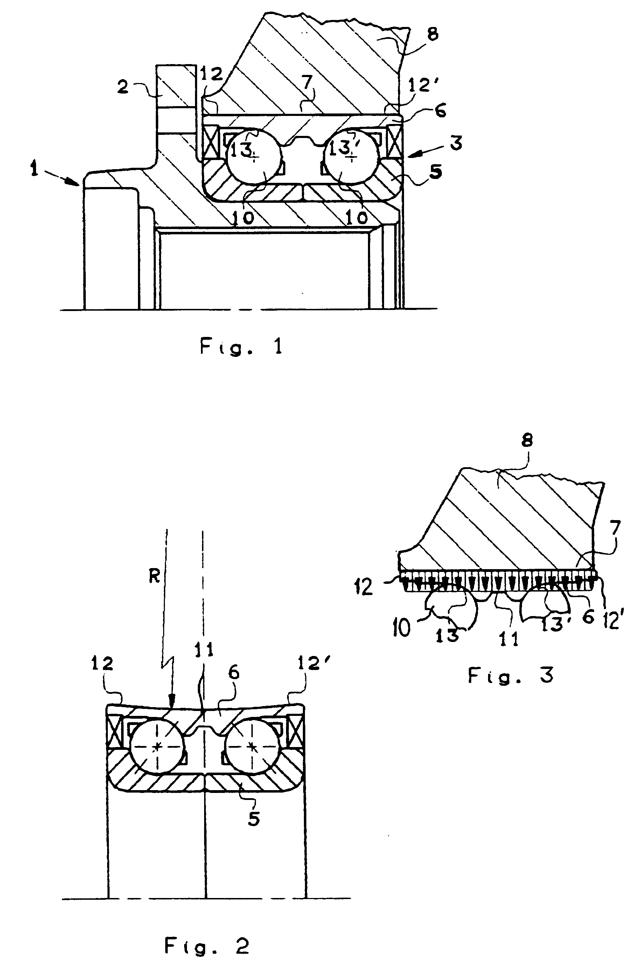

Le montage représenté à la figure 1 s'applique à une roue motrice de véhicule et comporte essentiellement un moyeu 1 muni à l'une de ses extrémités d'une bride 2 pour la fixation de la roue.

Sur la queue de moyeu est placé un roulement 3 dont la bague intérieure 5 est réalisée à titre d'exemple en deux parties.

La bague extérieure 6 est montée dans l'alésage 7 du porte-fusée 8, susceptible de constituer le pivot d'une roue directrice.

La bague intérieure 5 est montée sur le moyeu 1 et les corps roulants 10 sont disposés entre les bagues 5, 6 au contact de pistes de roulement portées par les dites bagues 5, 6.

Dans le but de limiter soit :
- l'étendue axiale de l'alésage 7 par suite du montage d'anneaux d'arrêt placés dans des gorges dudit alésage qui constituent l'appui axial de la bague, soit :
   - l'étendue axiale de la bague 6 par suite du montage d'anneaux d'arrêt placés dans des gorges disposées à la périphérie de la bague,
on prévoit présentement sur la bague extérieure 6 des zones latérales 12, 12' élastiquement déformables adjacentes aux pistes de roulement 13, 13' de ladite bague de part et d'autre de la zone médiane 11 de la bague.

Les zones latérales 12, 12' sont déformables au montage du roulement sous l'action d'un effort de contrainte radiale dirigé vers l'axe du roulement et immobilisent le roulement dans l'alésage 7 sous l'action de la force d'expansion radiale F exercée par chacune des zones 12, 12' qui définissent l'étendue axiale de la portée de montage de la bague extérieure dans ledit alésage.

Le montage ainsi réalisé ne nécessite pas l'adjonction d'organes axiaux d'immobilisation additionnels, notamment d'anneaux d'arrêt.

La portée de montage de la bague 6 possède une légère concavité qui permet une réduction latérale du diamètre extérieur au cours de son montage dans l'alésage 7.

La concavité précitée de rayon R peut-être obtenue par tout procédé connu notamment au cours d'un usinage ou repoussage sous l'action d'un effort de déformation radiale.

## Revendications

1. Montage d'un roulement de roue comportant une bague extérieure (6) immobilisée dans un alésage (7) séparée radialement d'une bague intérieure (5) par des corps roulants (10) disposés entre lesdites bagues (6, 5) et respectivement en contact avec des pistes de roulement portées par la bague intérieure et des pistes de roulement (13, 13') portées par la bague extérieure situées de part et d'autre d'une zone médiane (11), **caractérisé par le fait que** les pistes de roulement sont latéralement adjacentes à une zone (12, 12') de la bague extérieure (6) élastiquement déformable sous l'action d'un effort de contrainte radiale dirigé vers l'axe du roulement, et **par le fait que** la portée de montage de la bague extérieure (6), respectivement en appui sur la paroi de l'alésage (7) sous l'action de la force d'expansion radiale exercée par ladite zone (12, 12') pour définir la portée de montage de la bague extérieure (6) dans ledit alésage (7), possède une légère concavité dans le but de permettre une réduction dans lesdites zones latérales (12, 12') du diamètre extérieur de la bague au cours du montage de celle-ci dans l'alésage et de répartir la pression de contact de la bague extérieure (6) avec la surface dudit alésage (7) de façon homogène en direction axiale.

## Patentansprüche

1. Lageranordnung für ein Rad, mit einem Außenring (6), der in einer Bohrung (7) befestigt ist und einen radialen Abstand von einem Innenring (5) aufweist durch Rollkörper (10), die zwischen den Ringen (6, 5) angeordnet sind und Rollbahnen berühren, die am Innenring vorgesehen sind, bzw. Rollbahnen (13, 13') berühren, die am Außenring vorgesehen sind beidseits eines Mitten-bereiches (11), **dadurch gekennzeichnet, daß** die Rollbahnen in seitlicher Nachbarschaft eines Bereichs (12, 12') des Außenringes (6) angeordnet sind, der elastisch verformbar ist unter der Einwirkung einer radial zur Lagerachse hin gerichteten Druckkraft, und daß die Anlagefläche des Außenringes (6), die sich auf der Wand der Bohrung (7) abstützt, unter der Einwirkung einer radialen Expansionskraft, die von diesem Bereich (12, 12') ausgeht, um die Anlagefläche des Außenringes 6 in der Bohrung 7 zu bilden, eine geringe Konkavität aufweist im Hinblick auf eine Verringerung in den seitlichen Bereichen (12, 12') des Außendurchmessers des Ringes während seines Einsetzens in die Bohrung und im Hinblick auf eine gleichmäßige Verteilung des Anlagedrucks des Außenringes (6) auf die Oberfläche der Bohrung (7) in Axialrichtung.

## Claims

1. Wheel bearing assembly comprising an external ring (6) immobilised in a bore (7) and radially separated from an internal ring (5) by rolling bodies (10) disposed between said rings (6, 5) and respectively in contact with bearing races carried by the internal ring and bearing races (13, 13') carried by the external ring and located on respective sides of a median area (11), **characterised in that** the bearing races are laterally adjacent to an area (12, 12') of the external ring (6) which is elastically deformable under the action of a radial stress loading directed towards the axis of the bearing, and that the seating surface of the external ring (G), respectively bearing against the wall of the bore (7) under the action of the radial expansion force exerted by said area (12. 12') to define the seat surface of the external ring (6) in said bore (7), is provided with a slight concavity in order to allow a reduction in said lateral areas (12, 12') of the external diameter of the ring during mounting thereof in the bore, and to distribute the contact pressure of the external ring (6) with the surface of said bore (7) in a homogeneous manner in an axial direction
